# EUROPEAN PATENT SPECIFICATION

(11) **EP 1 344 941 B1**
(45) Date of publication and mention of the grant of the patent: **18.05.2005**
(21) Application number: 03251461.4
(22) Date of filing: 11.03.2003
(51) Int. Cl.: F04D 19/04

(54) **RPM control for a vacuum pump system**
Drehzahlsteuerung für ein Vakuumpumpsystem
Contrôle de vitesse de rotation pour système de pompe à vide

(30) Priority: 13.03.2002 JP 2002067803; 11.09.2002 JP 2002265866
(43) Date of publication of application: 17.09.2003
(73) Proprietor: BOC Edwards Japan Limited, Tokyo (JP)
(72) Inventor: Namiki, Hirotaka, c/o BOC Edwards Technologies Ltd, Narashino-shi, Chiba (JP); Ohmori, Hideki, c/o BOC Edwards Technologies Ltd., Narashino-shi, Chiba (JP)
(74) Representative: Sturt, Clifford Mark

(56) References cited:
- EP-A- 0 898 083
- EP-A- 1 081 380
- EP-A- 1 091 019

## Description

The present invention relates to a vacuum pump system and a vacuum pump RPM control method and, in particular, to a vacuum pump system and a vacuum pump RPM control method in which even when a plurality of vacuum pumps are arranged, the RPM and phases of the vacuum pumps are matched with each other, thereby preventing a beat and low frequency vibration.

As a result of the recent development of electronics, there is a rapid increase in the demand for semiconductor devices such as memories and integrated circuits.

These semiconductor devices are manufactured, for example, by doping highly pure semiconductor substrates with impurities to impart electrical properties thereto, or forming minute circuits on semiconductor substrates by etching.

Then to avoid the influence of dust or the like in the air, such operations have to be performed in a high vacuum chamber. To evacuatethechamber, avacuum pump is generallyused. Inparticular, a turbo-molecular pump, which is a kind of vacuum pump, is widely used since it involves little residual gas and is easy to maintain.

Also, a semiconductor manufacturing process includes a number of steps in which various process gases are caused to act on semiconductor substrates, and the turbo-molecular pump is used not only to create a vacuum in a chamber, but also to discharge these process gases from the chamber.

Further, a vacuum pump is also used in equipment such as an electron microscope to create a high vacuum state in the chamber accommodating the electron microscope or the like to thereby prevent refraction of the electron beam or the like due to the presence of dust or the like.

In this way, vacuum pumps are widely used in various fields. Nowadays, there are many occasions where vacuum pumps are used. Regarding the production of semiconductors, there is a plan for producing a semiconductor wafer larger than the conventional ones. Regarding the field of electron microscope or the like, an electron microscope or the like larger than the conventional ones is being realized as an apparatus, with the installation of additional equipment being planned.

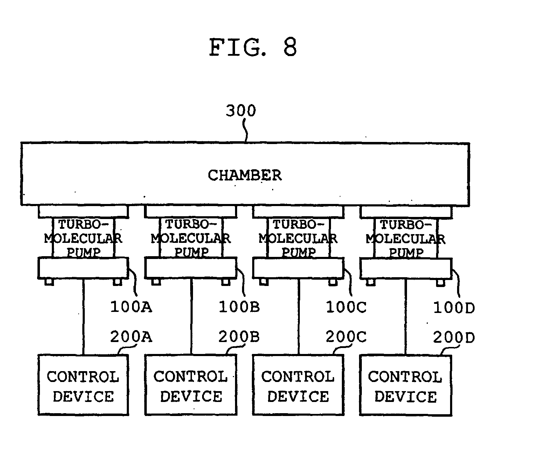

For such purposes, a plurality of vacuum pumps may be used. Fig. 8 schematically shows such a pump system configuration.

In Fig. 8, connected to the chamber 300 of an apparatus constituting the object of suction which is to be subjected to pressure reduction through suction, are a plurality of vacuum pumps, for example, turbo-molecular pumps 100A, 100B, 100C, and 100D.

Is should be noted that actually, there exist valves, such as opening/closing valves, and dampers for absorbing vibration between the turbo-molecular pumps 100A, 100B, 100C, and 100D and the chamber 300 constituting the object of suction which is to be subjected to pressure reduction through suction by the turbo-molecular pumps. However, such components are omitted in the drawing for the sake of simplification.

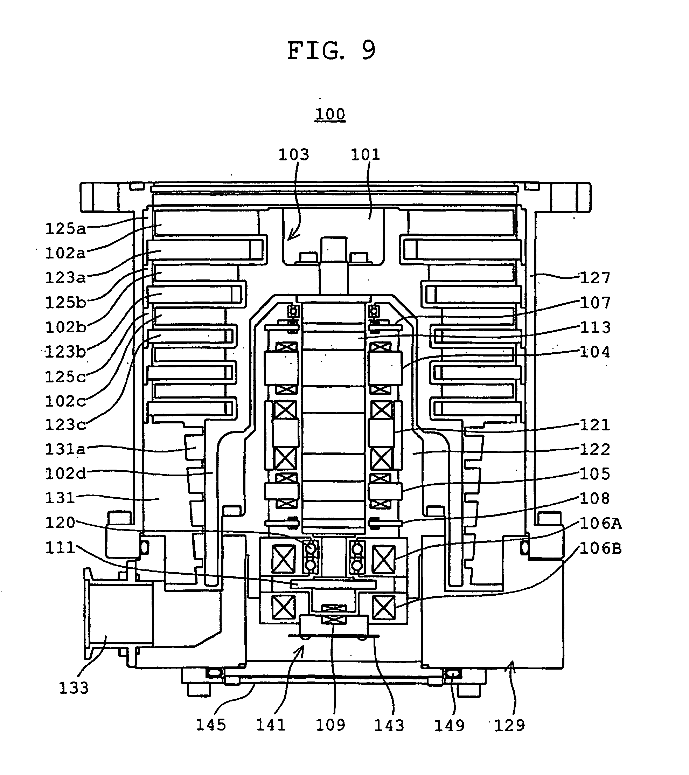

Further, the turbo-molecular pumps 100A, 100B, 100C, and 100D are respectively controlled by control devices 200A, 200B, 200C, and 200D. Fig. 9 is a longitudinal sectional view of one of these turbo-molecular pumps.

In Fig. 9, the turbo-molecular pump 100 has an inlet port 101 at the upper end of an outer cylinder 127. Inside the outer cylinder 127, there is provided a rotary member 103 having in its periphery a plurality of rotary blades 102a, 102b, 102c, ... formed radially in a number of stages and constituting turbine blades for sucking and discharging gas.

At the center of this rotary member 103, there is mounted a rotor shaft 113, which is supported so as to levitate and controlled in position by, for example, a so-called 5-axis control magnetic bearing.

In an upper radial electromagnet 104, four electromagnets are arranged in pairs in the X- and Y-axis. An upper radial sensor 107 composed of four electromagnets is provided in close vicinity to and in correspondence with the upper radial electromagnet 104. The upper radial sensor 107 detects radial displacement of the rotor shaft 113 and sends the detection result to the control device 200.

Based on the displacement signal from the upper radial sensor 107, the control device 200 controls the excitation of the upper radial electromagnet 104 through a compensation circuit (not shown) having a PID adjusting function, thereby adjusting the upper radial position of the rotor shaft 113.

The rotor shaft 113 is formed of a material having high magnetic permeability (e.g., iron), and is attracted by the magnetic force of the upper radial electromagnet 104. Such adjustment is conducted independently in the X- and Y-axis directions.

Further, a lower radial electromagnet 105 and a lower radial sensor 108 are arranged in the same manner as the upper radial electromagnet 104 and the upper radial sensor 107, adjusting the lower radial position of the rotor shaft 113 in the same manner as the upper radial position thereof.

Further, axial electromagnets 106A and 106B are arranged with a metal disc 111 having a circular plate-like shape and which is provided at the bottom of the rotor shaft 113 being therebetween. The metal disc 111 is formed of a material having high magnetic permeability like iron. To detect axial displacement of the rotor shaft 113, there is provided an axial sensor 109 whose axial displacement signal is sent to the control device 200.

And, based on this axial displacement signal, the axial electromagnets 106A and 106B are excitation-controlled through a compensation circuit (not shown) with a PID adjusting function of the control device 200. The axial electromagnet 106A upwardly attracts the metal disc 111 by magnetic force, and the axial electromagnet 106B downwardly attracts the metal disc 111.

In this way, the control device 200 appropriately adjusts the magnetic force exerted on the metal disc 111 by the axial electromagnets 106A and 106B to cause the rotor shaft 113 to magnetically levitate in the axial direction, supporting it in a space in a non-contact state.

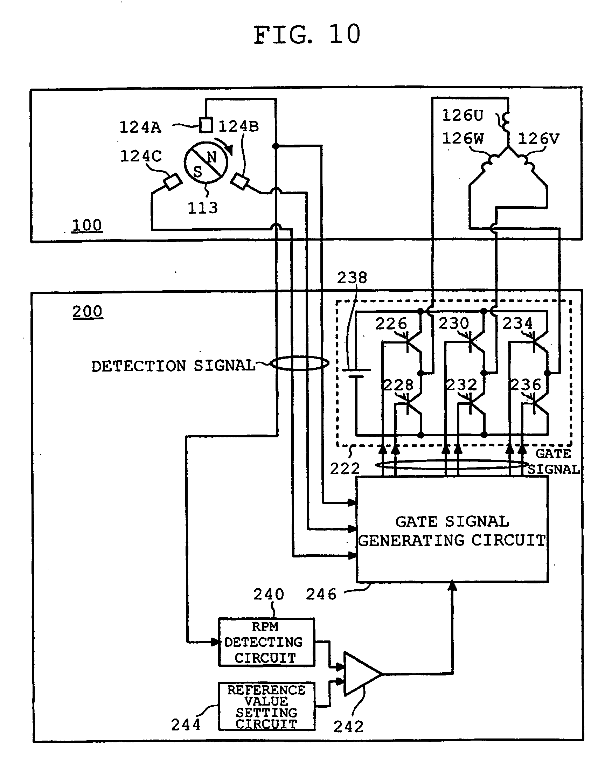

A motor 121 is a so-called three-phase brushless motor. Fig. 10 is a circuit diagram showing this motor and a motor control circuit.

In Fig. 10, a double-pole (N-pole and S-pole) permanent magnet constituting the rotor side component of the motor 121 is mounted to the periphery of the rotor shaft 113.

And, the motor 121 has as the stator side components three rotation detecting sensors 124A, 124B, and 124C, and these rotation detecting sensors 124A, 124B, and 124C are arranged so as to surround the rotor shaft 113. Further, the rotation detecting sensors 124A, 124B, and 124C are arranged at an interval of approximately 120 degrees.

It should be noted that the rotation detecting sensors 124A, 124B, and 124C are, for example, semiconductor hall sensors, and adapted to detect the magnetic flux density of the permanent magnet on the rotor side of the motor 121, thereby detecting the RPM, phase, etc. of the rotor shaft 113.

Further, the motor 121 has on the stator side thereof three-phase motor windings 126U, 126V, and 126W. These motor windings 126U, 126V, and 126W are also arranged so as to surround the rotor shaft 113 (in the drawing, they are shown separately from the rotor side of the motor 121 for the sake of convenience).

And, the motor windings 126U, 126V, and 126W are connected to a motor driving circuit 222 arranged in the control device 200.

This motor driving circuit 222 is equipped with a DC power source 238, and six transistors 226, 228, 230, 232, 234, and 236 forming a three-phase bridge. A predetermined gate signal is input to the base terminal of each of the transistors 226, 228, 230, 232, 234, and 236. By this gate signal, the AC voltage supplied to the motor windings 126U, 126V, and 126W is pulse-width-controlled (PWM control).

Meanwhile, the detection signal detected by the rotation detecting sensor 124A is input to an RPM detecting circuit 240 arranged in the control device 200, and the detection signals detected by the rotation detecting sensors 124A, 124B, and 124C are input to a gate signal generating circuit 246.

The RPM detecting circuit 240 detects the RPM of the rotor shaft 113 based on the detection signal detected by the rotation detecting sensor 124A, and outputs this detected RPM to a comparator 242.

Further, input to the comparator 242 is a predetermined reference RPM pre-set by a reference value setting circuit 244. And, the comparator 242 compares this predetermined reference RPM with the RPM of the rotor shaft 113 detected by the RPM detecting circuit 240, and outputs the comparison result to the gate signal generating circuit 246. The reference value setting circuit 244 is formed, for example, by a crystal oscillator.

When the comparison result of the comparator 242 indicates that the RPM of the rotor shaft 113 is not less than the reference RPM, the gate signal generating circuit 246 compares it with the detection signals from the rotation detecting sensors 124A, 124B, and 124C, and controls the gate signals of the transistors 226, 228, 230, 232, 234, and 236 so as to cause the rotor shaft 113 to rotate at low speed. When the RPM of the rotor shaft 113 is less than the reference RPM, the gate signals are controlled so as to cause the rotor shaft 113 to rotate at high speed.

In this way, the motor 121 is controlled to perform rotation control on the rotor shaft 113.

Meanwhile, a plurality of stationary blades 123a, 123b, 123c, ... are arranged so as to be spaced apart from the rotary blades 102a, 102b, 102c, ... of the rotor shaft 113 by small gaps. The rotary blades 102a, 102b, 102c, ... are inclined by a predetermined angle from a plane perpendicular to the axis of the rotor 113 in order to convey the molecules of exhaust gas downwards through collision.

Further, the stationary blades 123 are also inclined by a predetermined angle from a plane perpendicular to the axis of the rotor shaft 113, and arranged alternately with the rotary blades 102 so as to extend toward the inner side of the outer cylinder 127.

And, at one end, the stationary blades 123 are supported in a state in which they are fitted into the spaces between a plurality of stationary blade spacers 125a, 125b, 125c, ... stacked together.

The stationary blade spacers 125 are ring-like members which are formed, for example, of aluminum, iron, stainless steel, copper, or an alloy containing some of these metals as a component.

The outer cylinder 127 is fixed to the outer periphery of the stationary blade spacers 125 with a small gap therebetween. A base portion 129 is arranged at the bottom of the outer cylinder 127, and a threaded spacer 131 is arranged between the lower portion of the stationary blade spacers 125 and the base portion 129. And, an exhaust port 133 is formed below the threaded spacer 131 of the base portion 129, and communicates with the exterior.

The threaded spacer 131 is a cylindrical member formed of aluminum, copper, stainless steel, iron, or an alloy containing some of these metals as a component, and has in its inner peripheral surface a plurality of streaks of spiral thread grooves 131a.

The direction of the spiral of the thread grooves 131a is determined such that when the molecules of the exhaust gas move in the rotating direction of the rotary member 103, these molecules are conveyed toward the exhaust port 133.

At the lowermost portion of the row of rotary blades 102a, 102b, 102c, ... of the rotary member 103, a rotary blade 102d extends vertically downwards. The outer peripheral surface of this rotary blade 102d is cylindrical, and juts out toward the inner peripheral surface of the threaded spacer 131 so as to be in close vicinity to the inner peripheral surface of the threaded spacer 131 with a predetermined gap therebetween.

The base portion 129 is a disc-like member forming the base portion of the turbo-molecular pump 100, and is generally formed of a metal, such as iron, aluminum, or stainless steel. Further, the base portion 129 physically retains the turbo-molecular pump 100 and, at the same time, serves as a heat conduction path. Thus, it is desirable for the base portion 129 to be formed of a metal which has rigidity and high heat conductivity, such as iron, aluminum, or copper.

In this construction, when the rotor shaft 113 is driven by the motor 121 to rotate with the rotary blades 102, exhaust gas from the chamber is sucked in through the inlet port 101 by the action of the rotary blades 102 and the stationary blades 123.

The exhaust gas sucked in through the inlet port 101 flows between the rotary blades 102 and the stationary blades 123 to be conveyed to the base portion 129. At this time, the temperature of the rotary blades 102 is increased due to the frictional heat generated when the exhaust gas comes into contact with the rotary blades 102, the heat conduction generated in the motor 121, etc., and this heat is transmitted to the stationary blades 123 side by radiation or the conduction due to the gas molecules of the exhaust gas, etc.

The stationary blade spacers 125 are connected together in the outer periphery, and transmit to the exterior the heat received by the stationary blades 123 from the rotary blades 102, the frictional heat generated when the exhaust gas comes into contact with the stationary blades 123, etc.

The exhaust gas conveyed to the base portion 129 is sent to the exhaust port 133 while being guided by the thread grooves 131a of the threaded spacer 131.

In the above-described example, the threaded spacer 131 is arranged in the outer periphery of the rotary blade 102d, and the threaded grooves 131a are formed in the inner peripheral surface of the threaded spacer 131. However, in some cases, the threaded grooves may be formed in the outer peripheral surface of the rotary blade 102d, with a spacer with a cylindrical inner peripheral surface being arranged around the same.

Further, in order to prevent the gas sucked in through the inlet port 101 from entering the electrical component section formed by the motor 121, the lower radial electromagnet 105, the lower radial sensor 108, the upper radial electromagnet 104, the upper radial sensor 107, etc., the electrical component section is covered with a stator column 122, and the interior of this electrical component section is maintained at a predetermined pressure by a purge gas.

Thus, piping (not shown) is arranged in the base portion 129, and the purge gas is introduced through this piping. The introduced purge gas flows through the gap between the protective bearing 120 and the rotor shaft 113, the gap between the rotor and stators of the motor 121, and the gap between the stator column 122 and the rotary blades 102 before it is sent to the exhaust port 133.

Note that the turbo-molecular pump 100 has to be controlled based on individually adjusted specific parameters (e.g., the specific model and the characteristics corresponding to the model) . To store these control parameters, the main body of the turbo-molecular pump 100 contains an electronic circuit portion 141.

The electronic circuit portion 141 is composed of electronic parts, such as a semiconductor memory like EEP-ROM, and a semiconductor device for the access thereto, a board 143 for mounting the electronic parts, etc.

This electronic circuit portion 141 is accommodated in the lower central portion of the base portion 129 constituting the lower portion of the turbo-molecular pump 100, and is closed by a hermetic bottom cover 145.

Then, in some cases, the process gas is introduced into the chamber at high temperature for enhanced reactivity. And, when cooled to a certain temperature at the time of discharge, such process gas may be turned into solid to precipitate a product in the exhaust system.

And, such process gas attains low temperature inside the turbo-molecular pump 100 to be turned into solid, adhering to the inner surfaces of the turbo-molecular pump 100 to be deposited thereon.

Suppose, for example, SiCl₄ is used as the process gas in an Al etching apparatus. As can be seen from vapor pressure curve, under a low-vacuum state (760[torr] to 10⁻²[torr]) and at low temperature (approximately 20[C]), a solid product (e.g., AlCl₃) is precipitated, adhering to the inner surfaces of the turbo-molecular pump 100 to be deposited thereon.

When a precipitate of the process gas is deposited on the inner surfaces of the turbo-molecular pump 100, the deposited substance will narrow the pump flow passage, resulting in a deterioration in the performance of the turbo-molecular pump 100.

The above-mentioned product is likely to solidify and adhere in low-temperature portions, such as the portion near the exhaust port, and, in particular, near the rotary blades 102 and the threaded spacer 131. Conventionally, this problem is solved by winding a heater (not shown) and an annular water cooling tube 149 around the outer periphery of the base portion 129, etc. and embedding a temperature sensor (not shown) (e.g., a thermistor) in, for example, the base portion 129 to perform heating by the heater and cooling by the water cooling tube 149 (hereinafter referred to as TMS (temperature management system) so as to maintain the base portion 129 at a fixed high temperature (set temperature).

When, as shown in Fig. 8, a plurality of turbo-molecular pumps 100A, 100B, 100C, and 100D are used as the vacuum pumps, the control devices 200A, 200B, 200C, and 200D are conventionally subjected to independent control.

In this case, the control devices 200A, 200B, 200C, and 200D are capable of accurately setting the RPM of the rotary members 103 of the respective turbo-molecular pumps 100A, 100B, 100C, and 100D with an error of within several Hz with respect to the rated RPM of, for example, 48,000 (800 Hz).

However, even when the rated RPM of the rotary members 103 of the turbo-molecular pumps 100A, 100B, 100C, and 100D are set to the same value, a minute difference in RPM can be generated between the rotary members 103 of the turbo-molecular pumps 100A, 100B, 100C, and 100D with an error of within several Hz as described above. For example, the rotary member of the turbo-molecular pump 100A may rotate at 48,000 rpm (800 Hz) while that of the turbo-molecular pump 100B is rotating at 48,060 rpm (801 Hz).

In such cases, the difference in RPM between the rotary members 103 generates a beat in the turbo-molecular pumps 100A, 100B, 100C, and 100D, which can generate low-frequency vibration attributable to the beat.

And, such low-frequency vibration varies depending upon the combination of the model, volumes, etc. of the turbo-molecular pumps 100 arranged, and is difficult to eliminate even with the above-mentioned dampers provided between the turbo-molecular pumps 100A, 100B, 100C, and 100D and the chamber 300. Thus, if this vibration is transmitted from the turbo-molecular pumps 100A, 100B. 100C, and 100D to the chamber 300 side, there is the danger of the measurement with the electronic microscope or the like or the production of semiconductor devices in the chamber 300 being adversely affected.

EP1091019 discloses a vacuum exhaust system comprising a vacuum chamber; means for introducing a gas into the vacuum chamber; a main pump for exhausting the vacuum chamber and reducing a pressure of the vacuum chamber to a desired pressure; an auxiliary pump disposed downstream from the main pump; and piping for connecting them. The outer diameter of connecting piping as a connection between the main pump and the auxiliary pump is ½ inch (1.3cm) or less; and a length of the connecting piping and capability of the auxiliary pump are combined so that a back pressure of the main pump becomes 5 Torr or more.

The present invention has been made in view of the above-mentioned problem in the prior art. It is an object of the present invention to provide a vacuum pump system and a vacuum pump RPM control method in which even when a plurality of vacuum pumps are arranged, the RPM and phases of the rotary members of the vacuum pumps are matched with each other, thereby preventing a beat and low-frequency vibration.

Therefore, a vacuum pump system according to the present invention is equipped with N vacuum pumps each of which is equipped with a rotary member and a motor for rotating the rotary member and which are mounted side by side to equipment from which a predetermined gas is to be sucked, and control devices connected to the vacuum pumps and adapted to control at least one of RPM and rotation phases representing rotating conditions of the rotary members, the vacuum pump system comprising: setting means for setting one of the control devices as a master control device and (N - 1) control devices excluding the master control device as slave control devices; master detection means for detecting the rotating condition of the rotary member of a master vacuum pump of the vacuum pumps to which the master control device is connected; slave detection means for detecting the rotating conditions of the rotary members of slave vacuum pumps of the vacuum pumps to which the slave control devices are connected; and control means for controlling such that the rotating conditions of the rotary members detected by the slave detection means are in synchronism with the rotating condition of the rotary member detected by the master detection means.

The master control device outputs data on the rotating condition of the rotary member of the master vacuum pump. The slave control devices, on the other hand, take in the data on the rotating condition of the rotary member of the master vacuum pump. And, the control means performs control such that the rotating conditions of the rotary members of the slave vacuum pumps are in synchronism with the rotating condition of the rotary member of the master vacuum pump.

Due to this arrangement, even when a plurality of vacuum pumps are arranged, the RPM and phases of the rotary members of the vacuum pumps are matched with each other, thereby making it possible to prevent a beat and low-frequency vibration.

It should be noted that when the master vacuum pump is stopped, the rotating conditions of the rotary members of the slave vacuum pumps may be controlled through comparison with reference RPM and rotation phase.

Due to this arrangement, even when a plurality of vacuum pumps are arranged, the RPM and rotation phases of the rotary members of the vacuum pumps are matched with each other, thereby making it possible to prevent a beat and low-frequency vibration. Thus, even when the master control device is stopped, it is possible to continue operation without stopping the slave control devices.

Further, when the master vacuum pump is stopped, it is also possible to switch one of the slave devices to a new master control device and to re-start the operation using it as the master control device.

Due to this arrangement, even when the maser control device is stopped, it is possible to continue synchronous operation with

A vacuum pump system according to the present invention is equipped with N vacuum pumps each of which is equipped with a rotary member and a motor for rotating the rotary member and which are mounted side by side to equipment from which a predetermined gas is to be sucked, and control devices connected to the vacuum pumps and adapted to control at least one of RPM and rotation phases representing rotating conditions of the rotary members, the vacuum pump system comprising: synchronous signal generating means for generating and outputting a predetermined synchronous signal; detecting means for detecting the rotating conditions of the rotary members of the vacuum pumps; and control means for controlling such that the rotating conditions of the rotary members detected by the detecting means are in synchronism with the synchronous signal output from the synchronous signal generating means.

Based on the predetermined synchronous signal generated by the synchronous signal generating means, the RPM and phases of the motors are adjusted simultaneously, with the result that the RPM and phases of the motors are matched with each other.

And, since the synchronous signal is generated based on a crystal oscillator or the like, it is possible to further enhance the control accuracy. Thus, no beat or low-frequency vibration is generated. Thus, even when a plurality of vacuum pumps are arranged, it is possible to prevent a beat and low-frequency vibration by matching the RPM and phases of the rotary members of the vacuum pumps.

comparison means for comparing the rotating condition of the rotary member detected by the detecting means with at least one of a reference RPM and rotation phase; external comparison means for comparing the rotating condition of the rotary member detected by the detecting means with an external synchronous signal; switching means for selecting the transmission of the synchronous signal to the exterior or the reception of the synchronous signal from the exterior based on a predetermined switching signal, and which is input with the comparison result of the internal comparison means and the comparison result of the external comparison means , and outputs an output signal which is selected from one of the input comparison results based on the switching signal; and rotation control means for controlling the rotating condition of the rotary member based on the output signal output from the switching means.

The switching means effects selection between transmission and reception of the synchronous signal based on the predetermined switching signal. Further, based on the predetermined switching signal, the switching means effects selection as to whether the rotating condition of the rotary member is to be controlled with respect to a reference RPM and rotation phase or with respect to an external synchronous signal.

This facilitates switching of the operation.

The vacuum pump device composed of a rotary member, a motor, a detecting means, an internal comparison means, an external

Further, the present invention relates to a vacuum pump RPM control method for a vacuum pump system equipped with N vacuum pumps each of which is equipped with a rotary member and a motor for rotating the rotary member and which are mounted side by side to equipment from which a predetermined gas is to be sucked, and control devices connected to the vacuum pumps and adapted to control the RPM of the rotary members, the method being characterized in that the RPM of the rotary members are all controlled to be the same.

Due to this arrangement, there is no need for both the RPM and phases of the rotary members to be always matched with each other. When solely the RPM of the rotary members of all the vacuum pumps are matched with each other, it is possible to prevent a beat and, further, low-frequency vibration.

Embodiments of the present invention will now be described by way of further example only and with reference to the accompanying drawings, in which:
Fig. 1 is a schematic structural diagram showing a pump system according to a first embodiment of the present invention;
Fig. 2 is a circuit diagram showing a motor and a motor control circuit according to the first embodiment of the present invention;
Fig. 3 is a diagram showing how switching is effected by a master/slave signal;
Fig. 4 is a diagram showing a phase matching process in a slave device;
Fig. 5 is a schematic structural diagram showing a pump system according to a second embodiment of the present invention;
Fig. 6 is a diagram showing how switching between slave and master is effected in a control device;
Fig. 7 is a schematic structural diagram showing a pump system according to a fourth embodiment of the present invention;
Fig. 8 is a schematic structural diagram showing a conventional pump system;
Fig. 9 is a longitudinal sectional view of a turbo-molecular pump; and
Fig. 10 is a circuit diagram showing a conventional motor and motor control circuit.

A first embodiment of the present invention will now be described.

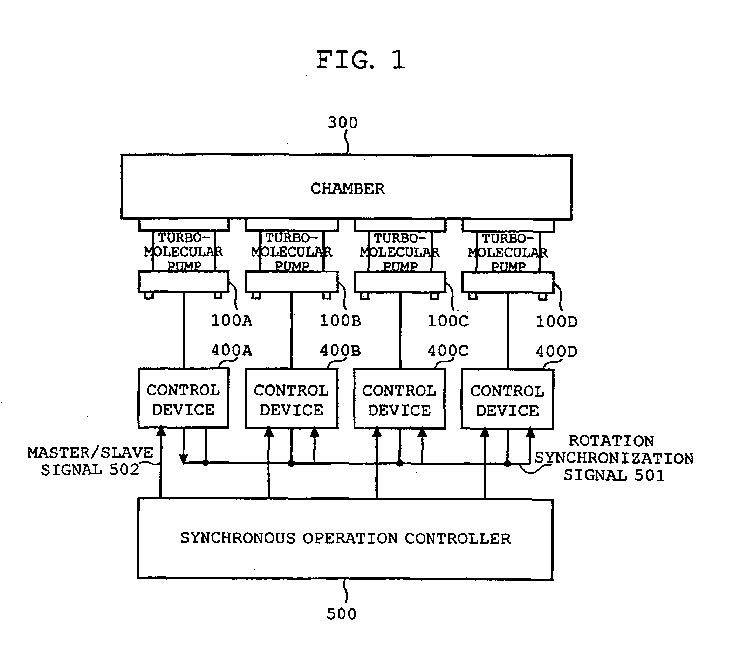

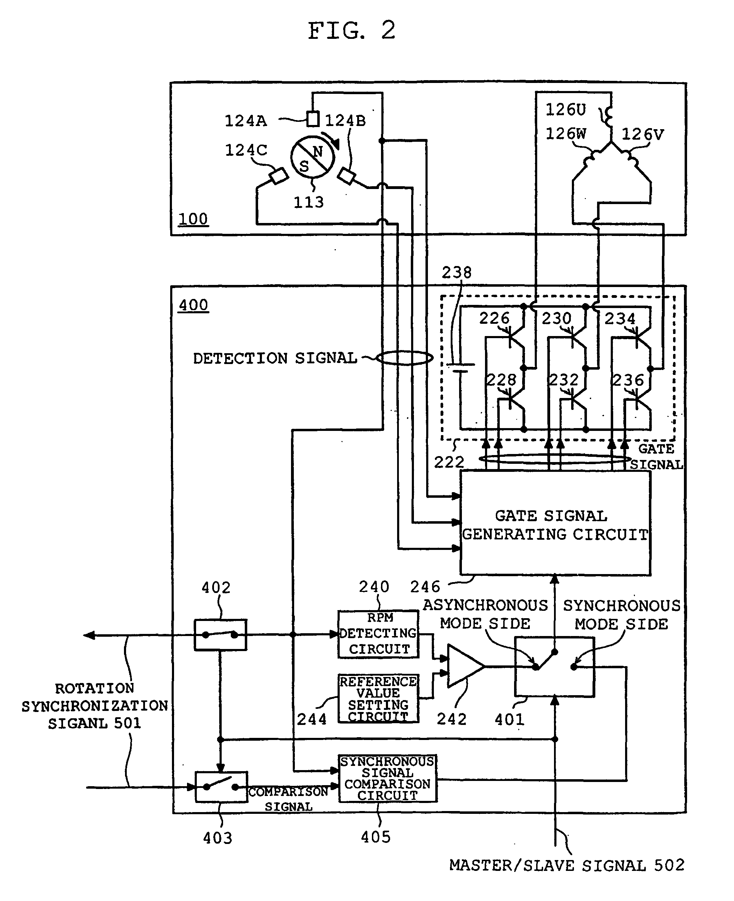

Fig. 1 is a schematic structural diagram showing a pump system according to the first embodiment of the present invention, and Fig. 2 is a circuit diagram showing a motor and a motor control circuit. The components which are the same as those of Figs. 8 to 10 are indicated with the same reference numerals, and a description of such components will be omitted.

In Fig. 1, the pump system of this embodiment is equipped with a synchronous operation controller 500. This synchronous operation controller 500 is capable of communicating with each of the control devices 400A, 400B, 400C, and 400D.

Specifically, the synchronous operation controller 500 outputs the master/slave signal 502 to each of the control devices 400A, 400B, 400C, and 400D. As statedbelow, thismaster/slavesignal 502 determines which of the control devices 400A, 400B, 400C, and 400D is to serve as the master device and which of them is to serve as the slave device.

Meanwhile, communication is effected between the control devices 400A, 400B, 400C, and 400D by a rotation synchronization signal 501.

In Fig. 2, as compared with the conventional control devices 200, each of the control devices 400 is equipped with an output switch 402, an input switch 403, a synchronous signal comparison circuit 405, and a mode changeover switch 401.

The detection signal of the rotation detecting sensor 124A is input to the output switch 402, which can output it as the rotation synchronization signal 501. Further, the output switch 402 is controlled by the master/slave signal 502, switching between the output and non-output of the rotation synchronization signal 501.

On the other hand, the rotation synchronization signal 501 is input to the input switch 403, which can output it to the synchronous signal comparison circuit 405 as a predetermined signal (hereinafter referred to as the comparison signal). Further, like the output switch 402, the input switch 403 is controlled by the master/slave signal 502, switching between taking-in and non-taking-in of the rotation synchronization signal 501.

Further, input to the synchronous signal comparison circuit 405 is the detection signal of the rotation detecting sensor 124A. And, this synchronous signal comparison circuit 405 contains a phase locked loop circuit (hereinafter referred to as the PLL circuit) serving as a phase control circuit, etc., and performs, for example, phase comparison between the detection signal of the rotation detecting sensor 124A and a comparison signal which is the output of the input switch 403, outputting the comparison result to the mode changeover switch 401.

The mode changeover switch 401 can effect switching between the output of the synchronous signal comparison circuit 405 (hereinafter referred to as the synchronous mode side) and the output of the comparator 242 (hereinafter referred to as the asynchronous mode side). Further, the mode changeover switch 401 is also controlled by the master/slave signal 502, supplying the switched output to the gate signal generating circuit 246.

In this construction, during synchronous operation, the output switch 402, the input switch 403, and the mode changeover switch 401 are controlled as follows by the master/slave signal 502, respectively.

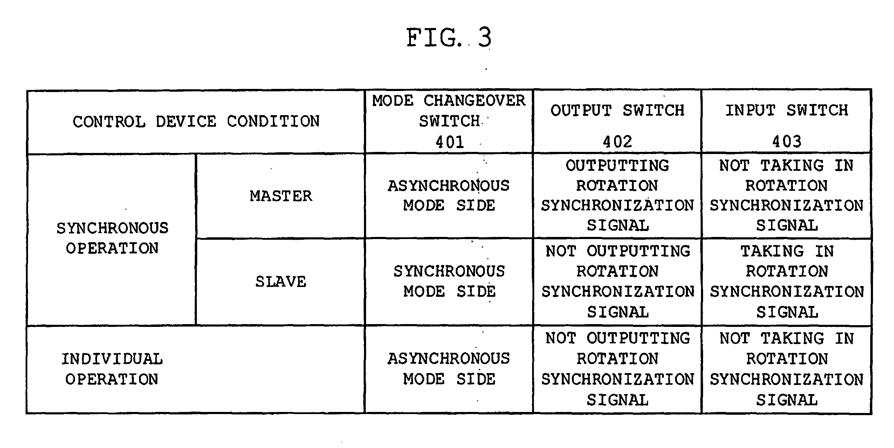

The switch changeover by the master/slave signal 502 will be described with reference to Fig. 3. In describing this embodiment, the control device 400A will be regarded as the master device, and the control devices 400B, 400C, and 400D will be regarded as the slave devices. In this case, the master/slave signal 502 sets the control device 400A as the master device, and sets the control devices 400B, 400C, and 400D as the slave devices.

In Fig. 3, in the control device 400A serving as the master (the master sections in the drawing), the output switch 402 thereof is placed in a state of "outputting a rotation synchronization signal" , the input switch 403 is placed in a state of "not taking in the rotation synchronization signal", and the mode changeover switch 401 is placed in the "asynchronous mode side".

Thus, from the control device 400A serving as the master, the rotation synchronization signal 501 is output through the output switch 402 thereof.

Further, in the control device 400A, the mode changeover switch 401 has been switched to the asynchronous mode side, so that the output of the comparator 242 is transmitted to the gate signal generating circuit 246. Thus, the rotation control on the rotor shaft 113 in the control device 400A serving as the master is conducted in the same manner as in the prior art.

Meanwhile, in each of the control devices 400B, 400C, and 400D serving as slaves (the slave sections in the drawing), the output switch 402 is placed in the state of "not outputting the rotation synchronization signal" , the input switch 403 is placed in the state of "taking in the rotation synchronization signal", and the mode changeover switch 401 is placed on the "synchronous mode side".

That is, in each of the control devices 400B, 400C, and 400D serving as slaves, the rotation synchronization signal 501 is taken in through the input switch 403 , and a comparison signal corresponding to the rotation synchronization signal 501 is output to the synchronous signal comparison circuit 405.

And, in the synchronous signal comparison circuit 405, the phase of each signal is detected from the rise/fall of the detection signal of the rotation detecting sensor 124A and the rise/fall of the comparison signal. Further, in the synchronous signal comparison circuit 405, matching and mismatching of phase is judged with respect to the phase of each signal.

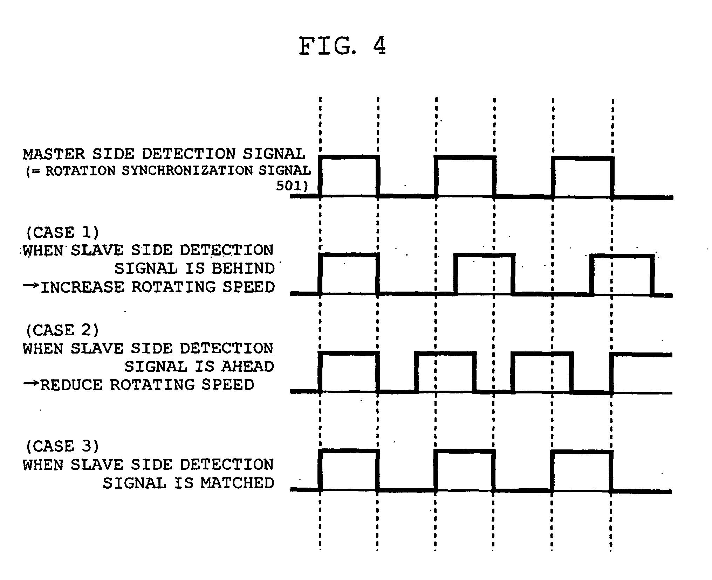

And, since the mode changeover switch 401 is placed on the synchronous mode side, the comparison result obtained by the synchronous signal comparison circuit 405 is transmitted to the gate signal generating circuit 246. In the gate signal generating circuit 246, the rotating speed of the rotor shaft 113 is increased or reduced based on the comparison result obtained by the synchronous signal comparison circuit 405 to effect phase matching process between detection signal of the rotation detecting sensor 124A and the rotation synchronization signal 501. Fig. 4 shows how this phase matching process is performed in the slave device.

As shown in Fig. 4 , in case 1, the phase of the detection signal of the rotation detecting sensor 124A is behind the phase of the rotation synchronization signal 501. Thus, the synchronous signal comparison circuit 405 performs control on the gate signal generating circuit 246 so as to increase the rotating speed of the rotor shaft 113.

On the other hand, in case 2, the phase of the detection signal of the rotation detecting sensor 124A is ahead of the phase of the rotation synchronization signal 501. Thus, the synchronous signal comparison circuit 405 performs control on the gate signal generating circuit 246 so as to reduce the rotating speed of the rotor shaft 113.

As in the prior art, the gate signal generating circuit 246, which has undergone such control, controls the gate signal of each of the transistors 226, 228, 230, 232, 234, and 236 of the motor driving circuit 222 to vary the rotating speed of the rotor shaft 113.

And, in case 3, the phase of the rotation synchronization signal 501 and the phase of the detection signal of the rotation detecting sensor 124A are matched with each other.

As a result, the RPM and phases of the respective rotor shafts 113 of the turbo-molecular pumps 100A, 100B, 100C, and 100D are matched with each other.

Thus, the turbo-molecular pumps 100A, 100B, 100C, and 100D involve no beat or low-frequency vibration.

Thus, even when a plurality of turbo-molecular pumps 100 are arranged, it is possible to realize a pump system in which no beat or low-frequency vibration is generated by matching the RPM and phases of the respective rotor shafts 113 of the turbo-molecular pumps 100 with each other.

Thus, it is not necessary for both the RPM and phases of the rotor shafts 113 to be matched with each other. A beat can be sufficiently prevented by matching the RPM alone.

Further, while in this embodiment the control device 400A serves as the master, the control is the same if one of the other control devices 400B, 400C, and 400D serves as the master.

In this case, the way in which the master device is selected from the plurality of control devices 400 may be previously determined by the pump system operator or the like, or determined through automatic setting in the synchronous operation controller 500.

It should be noted that in the case of automatic setting, selection may be effected based on the uptime, the volume, failure records, etc. of each turbo-molecular pump 100. In this way, it is possible to select the turbo-molecular pump 100, which is resistant to failure, as the master.

Further, while in this embodiment an example of providing four turbo-molecular pumps 100 and four control devices 400 has been explained, this should not be construed restrictively. It is also possible to provide two or three, or five or more turbo-molecular pumps and control devices, respectively.

Further, while in this embodiment communication by the rotation synchronization signal 501 is effected between the control devices 400A, 400B, 400C, and 400D through a wired system, this should not be construed restrictively. It is also possible to establish communication through a wireless system.

Further, similarly, it is possible to establish communication using the master/slave signal 502 between the control devices 400 and the synchronous operation controller 500 through a wireless system.

Thus, taking into account the condition of the place where the control devices 400, etc. are arranged, a system can be selected in which the rotation synchronization signal 501 can be easily **transmitted.**

Further, while in this embodiment the master/slave signal 502 is input to each control device 400, and the rotation synchronization signal 501 is transmitted between the control devices 400, this should not be construed restrictively. That is, it is also possible to adopt an arrangement in which the master/slave signal 502 is input to each turbo-molecular pump 100 or an arrangement in which the rotation synchronization signal 501 is transmitted between the turbo-molecular pumps 100.

Next, a second embodiment of the present invention will be described.

While in the pump system of the first embodiment, communication between the synchronous operation controller and the control devices is effected by the master/slave signal, in the pump system of the second embodiment, communication is effected further using an operation/stop signal and an alarm signal.

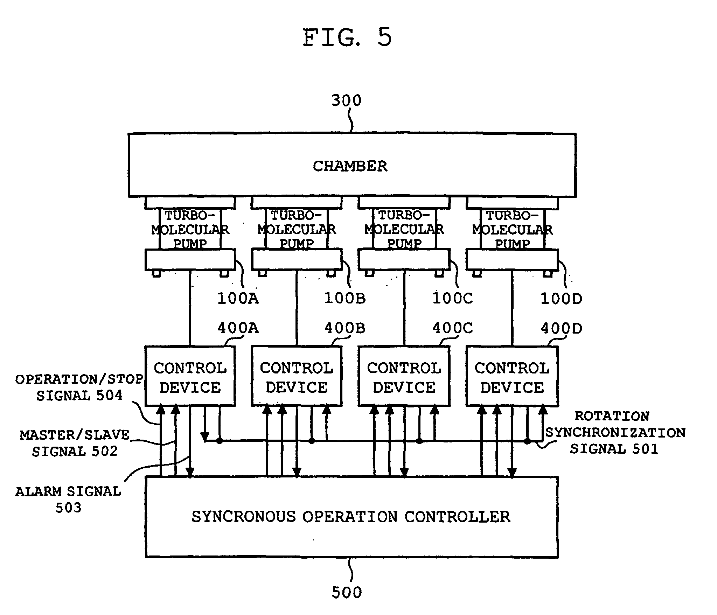

Fig. 5 is a schematic structural diagram showing a pump system according to the second embodiment of the present invention. The components which are the same as those of Fig. 1 are indicated with the same reference numerals, and a description of such components will be omitted.

Each of the control devices 400A, 400B, 400C, and 400D outputs an alarm signal 503 to the synchronous operation controller 500. The alarm signal 503 is a signal informing of any failure in the turbo-molecular pumps 100 and the control devices 400 and indicating the maintenance time for them.

Further, the synchronous operation controller 500 outputs an operation/stop signal 504 to each of the control devices 400A, 400B, 400C, and 400D. This operation/stop signal 504 is a signal for operating or stopping the turbo-molecular pumps 100 and the control devices 400.

As in the first embodiment, in this arrangement, the RPM and phases of the rotor shafts 113 of the turbo-molecular pumps 100A, 100B, 100C, and 100D are controlled so as to be matched with each other.

Further, during this synchronous operation, when the alarm signal 503 is output from one of the control devices 400A, 400B, 400C, and 400D due to failure or the like, the synchronous operation controller 500 outputs through its own control the operation/stop signal 504 to that control device 400 out of order, bringing the control device 400 and the turbo-molecular pump 100 to a stop so that the control device 400 out of order may not adversely affect the other control devices 400.

And, when the control device 400 brought to a stop because of failure or the like is a slave device, the other control devices 400 performing synchronous operation are not affected since a slave device only takes in the rotation synchronization signal 501. Thus, synchronous operation is continued with the remaining normal control devices alone.

Meanwhile, when the control device 400 brought to a stop because of failure or the like is the master device, there is a fear that the other slave devices will become unable to operate since the rotation synchronization signal 501 is not output from the master device.

In this embodiment, however, the synchronous operation controller 500 controls the operation/stop of the control devices 400 and, as in the first embodiment, also outputs the master/slave signal 502, so that it is possible to make a judgment as to whether the control device 400 at rest is the master or not.

Thus, when the master device has stopped operating, the synchronous operation controller 500 causes the slave devices to stop synchronous operation to enable all the slave devices to operate individually.

In this case, the output switch 402, the input switch 403, and the mode changeover switch 401 in each slave device are switched by the master/slave signal 502 as shown in Fig. 3.

That is, in every one of the control devices 400 operating individually (the individual operation section in the drawing), the output switch 402 is placed in the state of "not outputting the rotation synchronization signal", the input switch 403 is placed in the state of "not taking in rotation synchronization signal", and the mode changeover switch 401 is placed on the "asynchronous mode side".

Thus, as in the prior art, these control devices 400 control on their own the RPM, etc. of the rotor shafts 113 of the turbo-molecular pumps 100.

Thus, even in the event of failure or the like in the master device during synchronous operation, it is possible to continue operation without stopping the slave devices.

. It should be noted that while in this embodiment the synchronous operation controller 500 outputs, through its own control, the operation/stop signal 504 to the failed maser control device 400 to bring it to a stop, causing all the remaining slave control devices 400 to operate individually, this should not be construed restrictively.

That is, for example, when the alarm signal 503 is output from the control device 400 suffering failure or the like, the maintenance operator or the like for the pump system may depress, for example, a stop button (not shown) of the master control device 400 to stop that control device 400, causing all the remaining slave devices to operate individually.

Further, as in the first embodiment, the alarm signal 503 and the operation/stop signal 504 maybe transmitted through a wireless system.

Next, a third embodiment of the present invention will be described.

While the pump system of the second embodiment is controlled such that if the master device suffers failure or the like during synchronous operation, the slave devices operate individually, the pump system of the third embodiment is controlled such that even if the master device suffers failure or the like, synchronous operation is performed with the remaining slave devices alone.

The construction of the pump system of this embodiment is the same as that of the second embodiment (Fig. 5).

As in the second embodiment, in this construction, when, during synchronous operation, the alarm signal 503 is output due to failure or the like from one of the control devices 400A, 400B, 400C, and 400D, the synchronous operation controller 500 brings the control device 400 and the turbo-molecular pump 100 that are out of order to a stop.

And, as in the second embodiment, when the control device 400 brought to a stop due to failure or the like is the master device, there is a fear of the other slave devices becoming incapable of operation.

In this embodiment, however, when the master device comes to a halt, one of the slave devices is newly switched to the master device, by means of which control is performed so as to start synchronous operation again.

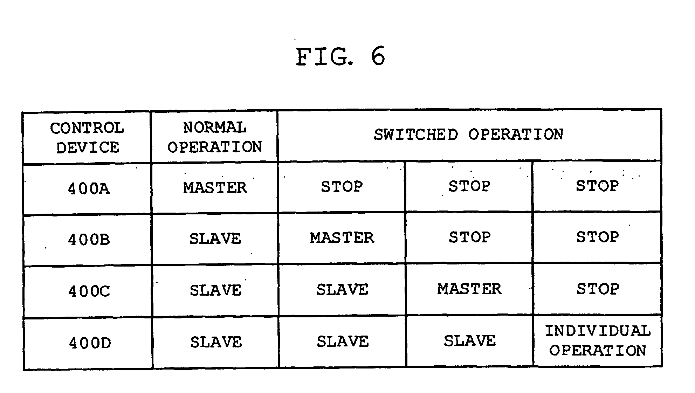

Fig. 6 shows how this slave/master switching is effected on the control device.

In Fig. 6, as stated above, during normal operation, the control device 400A serves as the master device, and the control devices 400B, 400C, and 400D serve as the slave devices.

Here, suppose the control device 400A, serving as the master device, has come to a halt due to failure or the like. In this case, one of the control devices 400B, 400C, and 400D serving as the slave devices and not out of order is switched to the master device according to a predetermined order. In this embodiment, it is assumed that the setting of the switching order is previously made as follows by the maintenance operator or the like for the pump system: (1) control device 400B, (2) control device 400C, and (3) control device 400D.

Thus, control is effected such that the control device 400B is switched to the master device. That is, the output switch 402, the input switch 403, and the mode changeover switch 401 of the control device 400B are switched from the "slave" state to the "master" state in Fig. 3 by the master/slave signal 502.

And, these three control devices 400B, 400C, and 400D start synchronous operation again through the same control as in the first embodiment.

Suppose, further, that the control device 400B, which has newly become the master device, has come to a halt during this operation.

In this case also, control is effected such that the control device 400C becomes the master device according to the above-mentioned predetermined order.

And, the control devices 400C and 400D start synchronous operation again.

Suppose, further, that the control device 400C has come to a halt during this operation.

In this case, it is the control device 400D alone that is in operation, so that, in order to continue operation, the control device 400D is controlled so as to stop synchronous operation and to operate individually. The output switch 402, the input switch 403, and the mode changeover switch 401 of the control device 400D are switched from the "slave" state to the "individual operation" state in Fig. 3 by the master/slave signal 502.

And, with the control device 400D alone, the RPM, etc. of the rotor shafts 113 are controlled in the same manner as in the prior art.

In this way, even if the master device suffers failure or the like during synchronous operation, it is possible to continue synchronous operation using the slave devices only, without stopping the slave devices.

In order that the operation of the control device 400 which is to become the master device may not be adversely affected, it is desirable that the master device suffering failure or the like be separated from the slave devices.

Thus, in view of this, when the master device suffering failure or the like is brought to a stop, switching is effected, for example, to the "individual operation" state shown in Fig. 3.

Further, while in the above description of the embodiment the slave devices are switched according to an order previously determined by the operator or the like, this should not be construed restrictively.

That is, in order that the turbo-molecular pump 100 which is relatively free from failure may become the master, it is possible to determine the switching order based on the uptime of each turbo-molecular pump 100, the volume, failure history, etc. of the turbo-molecular pump. This makes it possible to switch the turbo-molecular pump 100 which is relatively free from failure to the master.

Next, a fourth embodiment of the present invention will be described.

While in the first embodiment the entire pump system is caused to perform synchronous operation by the rotation synchronization signal output from the master device, in the fourth embodiment, the entire pump system is caused to perform synchronous operation by a rotation synchronization signal output from the synchronous operation controller.

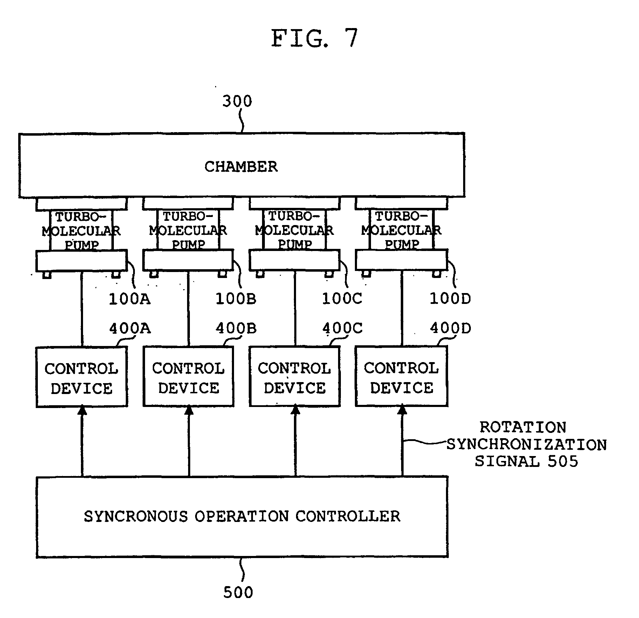

Fig. 7 is a schematic structural diagram showing a pump system according to the fourth embodiment. The components which are the same as those of Fig. 1 are indicated with the same reference numerals, and a description of such components will be omitted.

In Fig. 7, a rotation synchronization signal 505 generated by the synchronous operation controller 500 is input to each of the control devices 400A, 400B, 400C, and 400D.

At this time, the rotation synchronization signal 505 is generated in the interior (not shown) of the synchronous operation controller 500, using a crystal oscillator similar to that of the reference value setting circuit 244 of the first embodiment.

In this construction, in the control devices 400A, 400B, 400C, and 400D, the RPM and phases of the rotor shafts 113 of the turbo-molecular pumps 100A, 100B, 100C, and 100D are simultaneously controlled based on the same input rotation synchronization signal 505.

At this time, the RPM and phases of the rotors 113 are controlled based on the crystal oscillator in the synchronous operation controller 500, so that the accuracy in the synchronous control can be further enhanced.

Thus, no beat or low-frequency vibration is generated.

As a result, it is possible to obtain the same effect as that of the first embodiment of the present invention.

It should be noted that while in this embodiment described above the rotation synchronization signal 505 is generated in the synchronous operation controller 500, this should not be construed restrictively. It may be generated separately from the synchronous operation controller 500.

As described above, in accordance with the present invention, the rotating conditions of the rotary members of the slave vacuum pumps are made to be in synchronism with the rotating condition of the rotary member of the master vacuum pump, so that even when a plurality of vacuum pumps are arranged, it is possible to prevent a beat and low-frequency vibration by matching the RPM and phases of the rotary members of the vacuum pumps with each other.

Further, the rotating condition of the rotary member is controlled based on comparison with a reference RPM and/or rotation phase set for each slave vacuum pump, so that even if the master control device comes to a halt, it is possible to continue operation without stopping the slave control device.

And, there is provided a re-setting means for effecting re-setting using one of the slave control devices as the master control device, so that even if the master control device comes to a halt, it is possible to perform operation with the RPM and phases of the rotary members of the vacuum pumps being matched with each other.

Further, the rotating condition of the rotary member of each vacuum pump is made to be in synchronism with the synchronous signal output from the synchronous signal generating means, so that even when a plurality of vacuum pumps are arranged, it is possible to prevent a beat and low-frequency vibration by matching the RPM and phases of the rotary members of the vacuum pumps.

## Claims

1. A vacuum pump system equipped with N vacuum pumps (100) each of which is equipped with a rotary member (103) and a motor (121) for rotating the rotary member (103) and which are mounted side by side to equipment (300) from which a predetermined gas is to be sucked, and control devices (400) connected to the vacuum pumps (100) and adapted to control at least one of RPM and rotation phases representing rotating conditions of the rotary members (103), the vacuum pump system **characterized by** comprising:
synchronous signal generating means for generating and outputting a predetermined synchronous signal (501);
detecting means for detecting the rotating conditions of the rotary members (103) of the vacuum pumps (100); and
control means (222, 246, 242, 401, 405) for controlling such that the rotating conditions of the rotary members (103) detected by the detecting means is in synchronism with the synchronous signal (501) output from the synchronous signal generating means.

2. A vacuum pump system according to Claim 1, **characterized in that** the synchronous signal (501) is at least one of a reference RPM and rotation phase set to be only one for the N vacuum pumps (100).

3. A vacuum pump RPM control method for a vacuum pump system equipped with N vacuum pumps (100) each of which is equipped with a rotary member (103) and a motor (121) for rotating the rotary member (103) and which are mounted side by side to equipment (300) from which a predetermined gas is to be sucked, and control devices (400) connected to the vacuum pumps (100) and adapted to control at least one of RPM and rotation phases representing rotating conditions of the rotary members (103),
**characterized in that** the rotating conditions of the rotary members (103) are all controlled to be the same.

4. A vacuum pump system according to Claim 1, **characterized by** comprising setting means for setting one of the control devices (400) as a master control device and (N - 1) control devices excluding the master control device as slave control devices, and **characterized in that**:
one of the detecting means is master detection means for detecting the rotating condition of the rotary member (103) of a master vacuum pump of the vacuum pumps (100) to which the master control device is connected;
(N - 1) detecting means excluding the one of the detecting means are slave detection means for detecting the rotating conditions of the rotary members (103) of slave vacuum pumps of the vacuum pumps (100) to which the slave control devices are connected; and
the synchronous signal generating means outputs the rotating conditions of the rotary members (103) of the master vacuum pump as a predetermined synchronous signal (501), and the rotating conditions of the rotary members (103) detected by the slave detection means are controlled to be in synchronism with the synchronous signal (501).

5. A vacuum pump system according to Claim 4, **characterized in that** the system further comprises stopping means for stopping the vacuum pumps (100),
and that when the master vacuum pump is stopped by the stopping means, the control means (222, 246, 242, 401, 405) controls the rotating conditions of the rotary members (103) detected by the slave detection means based on comparison with at least one of a reference RPM and rotation phase set for the slave vacuum pumps.

6. A vacuum pump system according to Claim 4, **characterized by** further comprising:
stopping means for stopping the vacuum pumps (100); and
re-setting means for, when the master vacuum pump is stopped by the stopping means, re-setting one of the slave control devices as the master control device.

7. A vacuum pump system according to Claim 6, **characterized in that** the re-setting by the re-setting means is effected based on a predetermined order.

8. A vacuum pump system according to Claim 6 or 7, **characterized in that** when the master vacuum pump is stopped by the stopping means and all the slave vacuum pumps but one are stopped, the control means (222, 246, 242, 401, 405) controls the rotating condition of the rotary member (103) of the one slave vacuum pump based on comparison with at least one of a reference RPM and rotation phase set for the slave vacuum pumps.

9. A vacuum pump system according to any one of Claims 5 to 8, **characterized in that** the system further comprises failure detecting means for detecting failure in the control devices (400) and the vacuum pumps (100),
and that the stopping means stops any of the vacuum pumps (100) in which failure is detected by the failure detecting means.

10. A vacuum pump system according to Claim 4,
**characterized by** comprising:
internal comparison means (242) for comparing the rotating condition of the rotary member (103) detected by each of the detecting means with at least one of a reference RPM and rotation phase;
external comparison means (405) for comparing the rotating condition of the rotary member (103) detected by each of the detecting means with an external synchronous signal (501);
switching means (401, 402, 403) for selecting the transmission of the synchronous signal (501) to the exterior or the reception of the synchronous signal (501) from the exterior based on a predetermined switching signal (502), and which is input with the comparison result of the internal comparison means (242) and the comparison result of the external comparison means 405), and outputs an output signal which is selected from one of the input comparison results based on the switching signal (502); and
rotation control means (222, 246) for controlling the rotating condition of the rotary member (103) based on the output signal output from the switching means (401, 402, 403).

11. A vacuum pump system according to Claim 10, which is equipped with N vacuum pump devices (100, 400) each of which is composed of the rotary member (103), the motor (121), the detecting means, the internal comparison means (242), the external comparison means (405), the switching means (401, 402, 403), and the rotation control means (222, 246), **characterized in that**:
the switching signal (502) is a signal that sets one of the vacuum pump devices (100, 400) as a master device and sets (N - 1) vacuum pump devices (100, 400) excluding the master device as slave devices;
when the master device is set by the switching signal (502), the switching means (401, 402, 403) selects the comparison result of the internal comparison means (242) while transmitting the rotating condition of the rotary member (103) detected by the detecting means to the exterior as a synchronous signal (501); and
when the slave devices are set by the switching signal (502), the switching means (401, 402, 403) selects the comparison result of the external comparison means (405) while receiving the synchronous signal (501) from the exterior.

12. A vacuum pump system according to Claim 10, which is equipped with synchronous signal generating means for generating and outputting the synchronous signal (501) and N vacuum pump devices (100, 400) each of which is composed of the rotary member (103), the motor (121), the detecting means, the internal comparison means (242), the external comparison means (405), the switching means (401, 402, 403), and the rotation control means (222, 246), **characterized in that**:
the switching means (401, 402, 403) selects the comparison result of the external comparison means (405) while receiving the synchronous signal (501) from the exterior.

13. A vacuum pump system according to Claim 10, 11, or 12, **characterized in that** the synchronous signal (501) is transmitted through a wired or wireless system.

14. A vacuum pump system according to any one of Claims 1, 2 or 4 to 13, **characterized in that** each of the rotary members (103) has rotary blades (102) and a rotor shaft (113) arranged at the center of the rotary blades (102), and is equipped with magnetic bearing means (104, 105, 106A, 106B, 107, 108, 109) which magnetically levitates the rotor shaft (113) for positional adjustment in at least one of the radial direction and the axial direction.

## Patentansprüche

1. Vakuumpumpensystem, das mit N Vakuumpumpen (100) ausgestattet ist, von welchen jede mit einem Drehelement (103) und einem Motor (121) zum Drehen des Drehelements (103) ausgestattet ist, und die Seite an Seite an einem Gerät (300) montiert sind, von dem ein vorbestimmtes Gas angesaugt wird, sowie mit Steuervorrichtungen (400), die an die Vakuumpumpen (100) angeschlossen und dazu ausgebildet sind, zumindest eins von Drehzahl und Drehphasen zu steuern, die Drehbedingungen der Drehelemente (103) darstellen, wobei das Vakuumpumpensystem **dadurch gekennzeichnet ist, dass** es Folgendes umfasst:
Synchronsignalerzeugungsmittel zum Erzeugen und Ausgeben eines vorbestimmten Synchronsignals (501);
Detektionsmittel zum Erfassen der Drehbedingungen der Drehelemente (103) der Vakuumpumpen (100); und
Steuermittel (222, 246, 242, 401, 405) zum derartigen Steuern, dass die Drehbedingungen der Drehelemente (103), die von dem Detektionsmittel erfasst werden, mit dem Synchronsignal (501), das von dem Synchronsignalerzeugungsmittel ausgegeben wird, synchron sind.

2. Vakuumpumpensystem nach Anspruch 1, **dadurch gekennzeichnet, dass** das Synchronsignal (501) mindestens eines von einer Referenzdrehzahl und einer Referenzdrehphase ist, die so eingestellt ist, dass sie nur eine für die N Vakuumpumpen (100) ist.

3. Vakuumpumpendrehzahlsteuerverfahren für ein Vakuumpumpensystem, das mit N Vakuumpumpen (100) ausgestattet ist, von welchen jede mit einem Drehelement (103) und einem Motor (121) zum Drehen des Drehelements (103) ausgestattet ist, und die Seite an Seite an einem Gerät (300) montiert sind, von dem ein vorbestimmtes Gas angesaugt wird, sowie mit Steuervorrichtungen (400), die an die Vakuumpumpen (100) angeschlossen und dazu ausgebildet sind, zumindest eins von Drehzahl und Drehphasen zu steuern, die Drehbedingungen der Drehelemente (103) darstellen,
**dadurch gekennzeichnet, dass** die Drehbedingungen der Drehelemente (103) alle so gesteuert sind, dass sie dieselben sind.

4. Vakuumpumpensystem nach Anspruch 1, **dadurch gekennzeichnet, dass** es Einstellmittel zum Einstellen einer der Steuervorrichtungen (400) als Hauptsteuervorrichtung und (N - 1) Steuervorrichtungen ausschließlich der Hauptsteuervorrichtung als Nebensteuervorrichtungen umfasst, und **dadurch gekennzeichnet, dass**:
eines der Detektionsmittel ein Hauptdetektionsmittel zum Erfassen der Drehbedingung des Drehelements (103) einer Hauptvakuumpumpe der Vakuumpumpen (100) ist, an das die Hauptsteuervorrichtung angeschlossen ist;
(N - 1) Detektionsmittel ausschließlich des einen der Detektionsmittel Nebendetektionsmittel zum Erfassen der Drehbedingungen der Drehelemente (103) von Nebenvakuumpumpen der Vakuumpumpen (100) sind, an die die Nebensteuervorrichtungen angeschlossen sind; und
das Synchronsignalerzeugungsmittel die Drehbedingungen der Drehelemente (103) der Hauptvakuumpumpe als vorbestimmtes Synchronsignal (501) ausgibt, und die Drehbedingungen der Drehelemente (103), die von dem Nebendetektionsmittel erfasst werden, so gesteuert sind, dass sie mit dem Synchronsignal (501) synchron sind.

5. Vakuumpumpensystem nach Anspruch 4, **dadurch gekennzeichnet, dass** das System des Weiteren Stoppmittel zum Stoppen der Vakuumpumpen (100) umfasst,
und dass, wenn die Hauptvakuumpumpe von dem Stoppmittel gestoppt wird, das Steuermittel (222, 246, 242, 401, 405) die Drehbedingungen der Drehelemente (103), die von dem Nebendetektionsmittel erfasst werden, auf der Basis eines Vergleichs mit mindestens einer von einer Referenzdrehzahl und Referenzdrehphase steuert, die für die Nebenvakuumpumpen eingestellt sind.

6. Vakuumpumpensystem nach Anspruch 4, **dadurch gekennzeichnet, dass** es des Weiteren umfasst:
Stoppmittel zum Stoppen der Vakuumpumpen (100); und
Stellmittel, um, wenn die Hauptvakuumpumpe durch das Stoppmittel gestoppt wird, eine von den Nebensteuervorrichtungen als Hauptsteuervorrichtung neu einzustellen.

7. Vakuumpumpensystem nach Anspruch 6, **dadurch gekennzeichnet, dass** die Neueinstellung durch das Stellmittel auf der Basis einer vorbestimmten Reihenfolge ausgeführt wird.

8. Vakuumpumpensystem nach Anspruch 6 oder 7, **dadurch gekennzeichnet, dass**, wenn die Hauptvakuumpumpe durch das Stoppmittel gestoppt wird, und alle der Nebenvakuumpumpen außer einer gestoppt sind, das Steuermittel (222, 246, 242, 401, 405) die Drehbedingung des Drehelements (103) der einen Nebenvakuumpumpe auf der Basis eines Vergleichs mit mindestens einer von einer Referenzdrehzahl und Referenzdrehphase steuert, die für die Nebenvakuumpumpen eingestellt sind.

9. Vakuumpumpensystem nach einem der Ansprüche 5 bis 8, **dadurch gekennzeichnet, dass** das System des Weiteren Störungsdetektionsmittel zum Erfassen einer Störung in den Steuervorrichtungen (400) und den Vakuumpumpen (100) umfasst,
und dass das Stoppmittel jede der Vakuumpumpen (100) stoppt, bei der eine Störung durch das Störungsdetektionsmittel erfasst wird.

10. Vakuumpumpensystem nach Anspruch 4, **dadurch gekennzeichnet, dass** es Folgendes umfasst:
interne Vergleichsmittel (242) zum Vergleichen der Drehbedingung des Drehelements (103), die von jedem der Detektionsmittel erfasst werden, mit mindestens einer von einer Referenzdrehzahl und Referenzdrehphase;
externe Vergleichsmittel (405) zum Vergleichen der Drehbedingung des Drehelements (103), die von jedem der Detektionsmittel erfasst werden, mit einem externen Synchronsignal (501);
Schaltmittel (401, 402, 403) zum Wählen der Übertragung des Synchronsignals (501) nach außen oder des Empfangs des Synchronsignals (501) von außen, basierend auf einem vorbestimmten Schaltsignal (502), das mit dem Ergebnis des Vergleichs des internen Vergleichsmittels (242) und dem Ergebnis des Vergleichs des externen Vergleichsmittels (405) eingegeben wird, und ein Ausgangssignal ausgibt, das von einem der eingegebenen Ergebnisse des Vergleichs basierend auf dem Schaltsignal (502) ausgewählt wird; und
Drehungssteuermittel (222, 246) zum Steuern der Drehbedingung des Drehelements (103) basierend auf dem Ausgangssignal, das von dem Schaltmittel (401, 402, 403) ausgegeben wird.

11. Vakuumpumpensystem nach Anspruch 10, das mit N Vakuumpumpen (100) ausgestattet ist, von welchen jede aus dem Drehelement (103), dem Motor (121), dem Detektionsmittel, dem internen Vergleichsmittel (242), dem externen Vergleichsmittel (405), dem Schaltmittel (401, 402, 403) und dem Drehungssteuermittel (222, 246) besteht, **dadurch gekennzeichnet, dass**:
das Schaltsignal (502) ein Signal ist, das eine der Vakuumpumpenvorrichtungen (100, 400) als Hauptvorrichtung einstellt und (N - 1) Vakuumpumpenvorrichtungen (100, 400) ausschließlich der Hauptvorrichtung als Nebenvorrichtungen einstellt;
das Schaltmittel (401, 402, 403), wenn die Hauptvorrichtung durch das Schaltsignal (502) eingestellt ist, das Ergebnis des Vergleichs des internen Vergleichsmittels (242) wählt, während die Drehbedingung des Drehelements (103), die von dem Detektionsmittel erfasst wird, als Synchronsignal (501) nach außen übertragen wird; und
das Schaltmittel (401, 402, 403), wenn die Nebenvorrichtungen durch das Schaltsignal (502) eingestellt sind, das Ergebnis des Vergleichs des externen Vergleichsmittels (405) wählt, während das Synchronsignal (501) von außen empfangen wird.

12. Vakuumpumpensystem nach Anspruch 10, das mit Synchronsignalerzeugungsmitteln zum Erzeugen und Ausgeben des Synchronsignals (501) und N Vakuumpumpenvorrichtungen (100, 400) ausgestattet ist, von welchen jede aus dem Drehelement (103), dem Motor (121), dem Detektionsmittel, dem internen Vergleichsmittel (242), dem externen Vergleichsmittel (405), dem Schaltmittel (401, 402, 403) und dem Drehungssteuermittel (222, 246) besteht, **dadurch gekennzeichnet, dass**:
das Schaltmittel (401, 402, 403) das Ergebnis des Vergleichs des externen Vergleichsmittels (405) wählt, während das Synchronsignal (501) von außen empfangen wird.

13. Vakuumpumpensystem nach Anspruch 10, 11 oder 12, **dadurch gekennzeichnet, dass** das Synchronsignal (501) durch ein verdrahtetes oder drahtloses System übertragen wird.

14. Vakuumpumpensystem nach einem der Ansprüche 1, 2 oder 4 bis 13, **dadurch gekennzeichnet, dass** jedes der Drehelemente (103) Drehschaufeln (102) und eine Drehwelle (113) hat, die in der Mitte der Drehschaufeln (102) angeordnet ist, und mit magnetischen Lagermitteln (104, 105, 106A, 106B, 107, 108, 109) ausgestattet ist, die die Drehwelle (113) zur Positionseinstellung in mindestens eine von der radialen Richtung und der axialen Richtung magnetisch schweben lassen.

## Revendications

1. Système de pompe à vide équipé de N pompes à vide (100), chacune d'entre elles étant équipée d'un élément rotatif (103) et d'un moteur (121) pour faire tourner l'élément rotatif (103), et lesquelles sont montées côte à côte sur un équipement (300) duquel un gaz prédéfini doit être aspiré, et de dispositifs de commande (400) raccordés aux pompes à vide (100) et adaptés pour commander au moins l'une parmi une vitesse de rotation et des phases de rotation représentant des conditions de rotation des éléments rotatifs (103), le système de pompe à vide **se caractérisant en ce qu'**il comprenne :
un moyen de génération de signal synchrone pour générer et faire sortir un signal synchrone prédéfini (501) ;
un moyen de détection pour détecter les conditions de rotation des éléments rotatifs (103) des pompes à vide (100) ;
un moyen de commande (222, 246, 242, 401, 405) pour commander de manière à ce que les conditions de rotation des éléments rotatifs (103) détectées par le moyen de détection soient en synchronisme avec le signal synchrone (501) qui sort du moyen de génération de signal synchrone.

2. Système de pompe à vide selon la revendication 1, **caractérisé en ce que** le signal synchrone (501) est au moins l'une parmi une vitesse de rotation et une phase de rotation de référence réglée pour être seulement une seule pour les N pompes à vide (100).

3. Méthode de commande de la vitesse de rotation d'une pompe à vide pour un système de pompe à vide équipé de N pompes à vide (100) dont chacune est équipée avec un élément rotatif (103) et un moteur (121) pour faire tourner l'élément rotatif (103), et lesquelles sont montées côte à côte sur un équipement (300) duquel un gaz prédéfini doit être aspiré, et de dispositifs de commande (400) raccordés aux pompes à vide (100) et adaptés pour commander au moins l'une parmi une vitesse de rotation et des phases de rotation représentant les conditions de rotation des éléments rotatifs (103),
**caractérisée en ce que** les conditions de rotation des éléments rotatifs (103) sont toutes commandées pour être les mêmes.

4. Système de pompe à vide selon la revendication 1, **caractérisé en ce qu'**il comprenne un moyen de réglage pour régler l'un des dispositifs de commande (400) en tant que dispositif de commande maître et (N - 1) dispositifs de commande, en excluant le dispositif de commande maître, en tant que dispositifs de commande esclaves, et **caractérisé en ce que** :
l'un des moyens de détection est un moyen de détection maître pour détecter la condition de rotation de l'élément rotatif (103) d'une pompe à vide maître des pompes à vide (100) auxquelles le dispositif de commande maître est raccordé ;
(N - 1) moyens de détection en excluant ledit un des moyens de détection, étant des moyens de détection esclaves pour détecter les conditions de rotation des éléments rotatifs (103) de pompes à vide esclaves des pompes à vide (100) auxquelles les dispositifs de commande esclaves sont raccordés; et
le moyen de génération du signal synchrone faisant sortir les conditions de rotation des éléments rotatifs (103) de la pompe à vide maître en tant que signal synchrone prédéfini (501), et les conditions de rotation des éléments rotatifs (103) détectées par le moyen de détection esclave étant commandées pour être en synchronisme avec le signal synchrone (501).

5. Système de pompe à vide selon la revendication 4, **caractérisé en ce que** le système comprenne par ailleurs un moyen d'arrêt pour arrêter les pompes à vide (100),
et **en ce que** lorsque la pompe à vide maître est arrêtée par le moyen d'arrêt, le moyen de commande (222, 246, 242, 401, 405) commande les conditions de rotation des éléments rotatifs (103) détectées par le moyen de détection esclave sur la base d'une comparaison avec au moins l'une parmi une vitesse de rotation et une phase de rotation de référence fixée pour les pompes à vide esclaves.

6. Système de pompe à vide selon la revendication 4, **caractérisé en ce qu'**il comprenne par ailleurs :
un moyen d'arrêt pour arrêter les pompes à vide (100) ; et un moyen de remise à l'état initial afin de, lorsque la pompe à vide maître est arrêtée par le moyen d'arrêt, remettre à l'état initial l'un des dispositifs de commande esclave en tant que dispositif de commande maître.

7. Système de pompe à vide selon la revendication 6, **caractérisé en ce que** la remise à l'état initial par le moyen de remise à l'état initial est effectuée sur la base d'un ordre prédéfini.

8. Système de pompe à vide selon les revendications 6 ou 7, **caractérisé en ce que** lorsque la pompe à vide maître est arrêtée par le moyen d'arrêt, et que toutes les pompes à vide esclaves à l'exception d'une sont arrêtées, le moyen de commande (222, 246, 242, 401, 405) commande la condition de rotation de l'élément rotatif (103) de cette unique pompe à vide esclave sur la base d'une comparaison avec au moins l'une parmi une vitesse de rotation et une phase de rotation de référence fixée pour les pompes à vide esclaves.

9. Système de pompe à vide selon l'une quelconque des revendications 5 à 8, **caractérisé en ce que** le système comprenne par ailleurs un moyen de détection des défaillances pour détecter des défaillances dans les dispositifs de commande (400) et les pompes à vide (100),
et **en ce que** le moyen d'arrêt arrête n'importe laquelle des pompes à vide (100) pour laquelle on détecte une défaillance grâce au moyen de détection des défaillances.

10. Système de pompe à vide selon la revendication 4, **caractérisé en ce qu'**il comprenne :
un moyen de comparaison interne (242) pour comparer la condition de rotation de l'élément rotatif (103) détectée par chacun des moyens de détection avec au moins l'une parmi une vitesse de rotation et une phase de rotation de référence;
un moyen de comparaison externe (405) pour comparer la condition de rotation de l'élément rotatif (103) détectée par chacun des moyens de détection avec un signal synchrone externe (501) ;
un moyen de commutation (401, 402, 403) pour sélectionner la transmission du signal synchrone (501) vers l'extérieur ou la réception du signal synchrone (501) en provenance de l'extérieur, sur la base d'un signal de commutation prédéfini (502), et lequel est entré avec le résultat de comparaison du moyen de comparaison interne (242) et le résultat de comparaison du moyen de comparaison externe (405), et qui fait sortir un signal de sortie sélectionné parmi l'un des résultats de comparaison entrés sur la base du signal de commutation (502) ; et
un moyen de commande de la rotation (222, 246) pour commander la condition de rotation de l'élément rotatif (103) sur la base du signal de sortie qu'à fait sortir le moyen de commutation (401, 402, 403).

11. Système de pompe à vide selon la revendication 10, lequel est équipé de N dispositifs de pompe à vide (100, 400) dont chacune se compose de l'élément rotatif (103), du moteur (121), du moyen de détection, du moyen de comparaison interne (242), du moyen de comparaison externe (405), du moyen de commutation (401, 402, 403), et du moyen de commande de la rotation (222, 246), **caractérisé en ce que** :
le signal de commutation (502) est un signal qui fixe l'un des dispositifs de pompe à vide (100, 400) comme étant un dispositif maître, et qui fixe (N - 1) dispositifs de pompe à vide (100, 400), en excluant le dispositif maître, comme étant les dispositifs esclaves;
lorsque le dispositif maître est fixé grâce au signal de commutation (502), le moyen de commutation (401, 402, 403) sélectionne le résultat de comparaison du moyen de comparaison interne (242) tout en transmettant vers l'extérieur la condition de rotation de l'élément rotatif (103) détectée par le moyen de détection en tant que signal synchrone (501) ; et
lorsque les dispositifs esclaves sont fixés grâce au signal de commutation (502), le moyen de commutation (401, 402, 403) sélectionne le résultat de comparaison du moyen de comparaison externe (405) tout en recevant le signal synchrone (501) en provenance de l'extérieur.

12. Système de pompe à vide selon la revendication 10, lequel est équipé avec un moyen de génération de signal synchrone pour générer et faire sortir le signal synchrone (501), et N dispositifs de pompe à vide (100, 400) dont chacun se compose de l'élément rotatif (103), du moteur (121), du moyen de détection, du moyen de comparaison interne (242), du moyen de comparaison externe (405), du moyen de commutation (401, 402, 403), et du moyen de commande de la rotation (222, 246), **caractérisé en ce que** :
le moyen de commutation (401, 402, 403) sélectionne le résultat de comparaison du moyen de comparaison externe (405) tout en recevant le signal synchrone (501) en provenance de l'extérieur.

13. Système de pompe à vide selon les revendications 10, 11, ou 12, **caractérisé en ce que** le signal synchrone (501) est transmis par l'intermédiaire d'un système câblé ou non câblé.

14. Système de pompe à vide selon l'une quelconque des revendications 1, 2 ou 4 à 13, **caractérisé en ce que** chacun des éléments rotatifs (103) possède des ailettes rotatives (102) et un arbre d'induit (113) disposé au centre des ailettes rotatives (102), et est équipé avec un moyen de support magnétique (104, 105, 106A, 106B, 107, 108, 109) qui soumet l'arbre d'induit (113) à une lévitation magnétique pour ajuster la position dans au moins l'une des direction radiale et direction axiale.
